# EUROPEAN PATENT SPECIFICATION

(11) **EP 1 195 543 B1**
(45) Date of publication and mention of the grant of the patent: **07.04.2004**
(21) Application number: 01123856.5
(22) Date of filing: 05.10.2001
(51) Int. Cl.: F16H 55/56, F16H 9/12

(54) **Clutch device for continuously variable transmission**
Kupplungseinrichtung für ein stufenloses Getriebe
Système d'embrayage pour transmission à variation continue de vitesse

(30) Priority: 05.10.2000 JP 2000305844
(43) Date of publication of application: 10.04.2002
(73) Proprietor: BANDO CHEMICAL INDUSTRIES, LTD., Kobe-shi, Hyogo 652-0883 (JP)
(72) Inventor: Miyata, Hirofumi, Hyogo-ku, Kobe-shi, Hyogo 652-0883 (JP)
(74) Representative: Laufhütte, Dieter, Dr.-Ing.

(56) References cited:
- EP-A- 0 117 680
- JP-A- 54 114 672
- PATENT ABSTRACTS OF JAPAN vol. 005, no. 090 (M-073), 12 June 1981 (1981-06-12) -& JP 56 035852 A (BANDO CHEM IND LTD;OTHERS: 01), 8 April 1981 (1981-04-08)
- PATENT ABSTRACTS OF JAPAN vol. 1996, no. 07, 31 July 1996 (1996-07-31) -& JP 08 074843 A (MIMURA KENJI), 19 March 1996 (1996-03-19)

## Description

### BACKGROUND OF THE INVENTION

The present invention relates to continuously variable transmissions and vehicles provided with the same.

Conventionally, as a rolling friction device, a device having the following configuration as disclosed in Japanese Laid-Open Patent Publication No. 8-74843 has been proposed. A pair of ring-shaped rotating members is arranged concentrically, opposing to each other, multiple rollers extending obliquely with a predetermined angle with respect to the radial direction of the rotating members are arranged along the circumferential direction of the rotating members between the two rotating members, and these rollers are held rollably by a holding member with intervals therebetween. This proposed example is characterized in that the rollers can be rolled while being slid between the two rotating members, so that the friction coefficient involved in relative rotation between the two rotating members can be kept constant and therefore the rotation resistance can be stable. JP 54 1146 72 described a continuously variable transmission comprising the features mentioned in the preamble of claims 1 or 2.

Today, a centrifugal clutch is generally mounted together with a belt-type continuously variable transmission of a weight roller type for motorbikes such as motor-scooters or minibikes, on which an engine of a small exhaust amount is mounted. The continuously variable transmission of a weight roller type has a weight roller that is moved by the centrifugal force, and the movement of the weight roller drives the movable sheave of the variable speed pulley to shift the transmission. On the other hand, a centrifugal clutch has a weight that is moved by the centrifugal force as in the case of the continuously variable transmission of the weight roller type. The movement of this weight interrupts the power transmission between the engine and the driving wheel (rear wheel). This centrifugal clutch is generally disposed on the driven side of the continuously variable transmission.

However, the centrifugal clutch is expensive and it is difficult to reduce the cost. In order to utilize smooth transmission by the continuously variable transmission and to start the vehicle smoothly in accordance with the increase of the rotation speed of the engine at the time of the start, a clutch that can disconnect power transmission smoothly is in demand.

### SUMMARY OF THE INVENTION

Therefore, it is an object of the present invention to disconnect power transmission smoothly by a clutch while reducing the cost by providing a clutch utilizing the configuration of a variable speed pulley.

In order to achieve the above object, the proposed rolling friction device is incorporated between the rotating shaft and the variable speed pulley or at least into a groove side face on the side of a fixed sheave in the belt groove surface of a variable speed pulley, and power transmission between the rotating shaft and the variable speed pulley or power transmission between the belt and the variable speed pulley can be disconnected by this rolling friction device.

More specifically, the present invention is based on a continuously variable transmission including a variable speed pulley having fixed and movable sheaves that are rotatably provided on a rotating shaft and opposed to each other, in which a belt groove is formed between the sheaves; and a V-belt wounded in the belt groove of the variable speed pulley, wherein transmission is shifted by changing the belt diameter during wind in the belt groove by moving the movable sheave close to and away from the fixed sheave to open and close the variable speed pulley.

Clutch means for disconnecting power transmission between the rotating shaft and the variable speed pulley is provided. The clutch means includes a pair of ring-shaped rotating members that are arranged such that they are concentrically opposed to each other and can rotate relative to each other; multiple rollers that are arranged along the circumferential direction of the rotating members between the two rotating members and whose rolling axis center is extending obliquely with a predetermined angle with respect to the radial direction of the rotating members; and a holding member for holding the multiple rollers such that the rollers are spaced away from each other and can roll. When the rotating members are pressed against the opposing rotating members, a connection state is established. One of the rotating members is provided on one side of the variable speed pulley or the rotating shaft, and the other rotating member is provided in the other side of the variable speed pulley or the rotating shaft.

According to the above embodiment, when the clutch means is in a non-connection state (OFF state) and the power transmission between the rotating shaft and the variable speed pulley is interrupted, then one of the two rotating members of the clutch is not pressed to the shaft direction so as to be directed to the other rotating member. However, when this clutch means is switched to a connection state (ON state), one of the two rotating members is pressed to the shaft direction so as to be directed to the other rotating member, so that power transmission is performed between the rotating shaft and the variable speed pulley. In this power transmission state, the continuously variable transmission is shifted, and in the transmission-shift state, the movable sheave moves close to and away from the fixed sheave to open and close the variable speed pulley, so that the V-belt moves in the belt groove to the radial direction to change the belt diameter during wind in the belt groove. Thus, the continuously variable transmission is shifted.

At this time, the clutch means has a pair of rotating members, one provided in the variable speed pulley and the other in the rotating shaft, and multiple rollers whose rolling axis center is extending obliquely with a predetermined angle with respect to the radial direction of the rotating members are arranged between the rotating members. These rollers are spaced away from each other and rollably held by a holding member. Therefore, when the rotating members roll while being pressed to the opposing rotating members, the rollers slide along the rotation direction of the rotating member by the relative rotation of the two rotating members while rolling in the state where the rollers are held by a holding member. The rolling and the slide of the rollers can provide a stable rotation resistance. Therefore, such clutch means for performing the rolling and the slide of the rollers allow power transmission between the rotating shaft and the variable speed pulley to be disconnected smoothly.

The clutch means is provided between the rotating shaft and the variable speed pulley, and is attached to the pulley, so that the configuration of the continuously variable transmission can be simple and compact. In addition, the clutch means has a simpler configuration than that of a centrifugal clutch having a weight and is inexpensive so that the cost of the continuously variable transmission can be reduced.

Furthermore, the present invention is based on a continuously variable transmission including a variable speed pulley having fixed and movable sheaves that are provided on a rotating shaft and opposed to each other, in which a belt groove is formed between the sheaves; and a V-belt wounded in the belt groove of the variable speed pulley, wherein the transmission is shifted by changing the belt diameter during wind in the belt groove by moving the movable sheave close to and away from the fixed sheave to open and close the variable speed pulley.

Clutch means for disconnecting power transmission between the V-belt and the variable speed pulley is provided at least on a groove side face on the fixed sheave side of the belt groove in the variable speed pulley. The clutch means includes a pair of ring-shaped rotating members that are arranged such that they are concentrically opposed to each other and can rotate relative to each other; multiple rollers that are arranged along the circumferential direction of the rotating members between the two rotating members and whose rolling axis center is extending obliquely with a predetermined angle with respect to the radial direction of the rotating members; and a holding member for holding the multiple rollers such that the rollers are spaced away from each other and can roll. When the rotating members are pressed against the opposing rotating members, a connection state is established. One of the rotating members is provided on a sheave of the variable speed pulley such that the rotating member can rotate together with the sheave, and the other rotating member is provided such that it rotates relative to the one rotating member while being in contact with a side face of the V-belt.

According to the above embodiment, and in the transmission-shift state of the continuously variable transmission, the movable sheave moves close to and away from the fixed sheave to open and close the variable speed pulley, so that the V-belt moves in the belt groove to the radial direction to change the belt diameter during wind in the belt groove. Thus, the continuously variable transmission is shifted. When this belt is moved onto the clutch means that is located on the groove side faces of the belt groove, the power transmission between the belt and the variable speed pulley is interrupted by the clutch means.

At this time, the clutch means has one rotating member provided in the fixed sheave and the other rotating member that rotates while being in contact with a side face of the belt. Multiple rollers whose rolling axis center is extending obliquely with a predetermined angle with respect to the radial direction of the rotating members are arranged between the two rotating members. These rollers are spaced away from each other and rollably held by a holding member. Therefore, when the rotating members rotates while being pressed by the belt side, the rollers slide along the rotation direction of the rotating member by the relative rotation of the two rotating members while rolling in the state where each roller is held by a holding member. The rolling and the slide of the rollers can provide a stable rotation resistance. Therefore, the clutch means for performing the rolling and the slide of the rollers allow power transmission between the V-belt and the variable speed pulley to be interrupted smoothly.

The clutch means is provided at least on a groove side face on the fixed sheave side of the belt groove of the variable speed pulley, and is built in the pulley, so that the configuration of the continuously variable transmission can be simple and compact. In addition, the clutch means has a simpler configuration than that of a centrifugal clutch having a weight and is inexpensive so that the cost of the continuously variable transmission can be reduced.

In this case, it is preferable to provide the clutch means on each of the groove side faces on the sides of the fixed and the movable sheaves of the belt groove in the variable speed pulley, the two clutch means being opposed to each other.

With this, the V-belt is moved to the position of the clutch means on the groove side face of the belt groove and is pushed up the rotating members of the clutch means both on the sides of the fixed and the movable sheaves and presses them. Thus, the power transmission between the variable speed pulley and the belt can be disconnected reliably and stably.

The rotating shaft is an input shaft and the variable speed pulley is a drive pulley. The clutch means may be provided on the drive pulley side. Thus, a desirable variable speed pulley in which clutch means is provided can be embodied.

In this case, in one embodiment, the present invention may include a driven pulley made of a variable speed pulley in which a fixed sheave and a movable sheave are supported on an output shaft that is parallel to the input shaft, and a belt groove is formed between the two sheaves; the V-belt wounded between the belt grooves of the drive and the driven pulleys; a weight roller that is provided on the side of the back face of the movable sheave of the drive pulley and is moved to the radially outer direction by an increase of a centrifugal force caused by rotation to move the movable sheave close to the fixed sheave so that the belt diameter during wind of the drive pulley is increased; and forcing means for forcing the movable sheave to move close to the fixed sheave that is provided on the side of the back face of the movable sheave of the driven pulley.

Thus, as the input shaft and the drive pulley thereon rotates, the centrifugal force acts on the weight roller located on the side of the back face of the movable sheave of the drive pulley. When the rotation speed of the input shaft is low, the centrifugal force that acts on the weight rollers is smaller than the forcing force of the forcing means. Therefore, the forcing force of the forcing means forces the movable sheave of the driven pulley to be moved closer to the fixed sheave so that the driven pulley is closed. On the other hand, the movable sheave of the drive pulley is moved apart from the fixed sheave by the V-belt that has been moved by being pulled by the closed driven pulley so that the drive pulley is opened. The power transmission between this open drive pulley and the input shaft, or between the drive pulley and the V-belt is interrupted, and therefore the V-belt does not run although the input shaft rotates, and thus power is not transmitted between the input and the output shafts.

When the rotation speed of the input shaft is increased from the non-connection state of the clutch, the centrifugal force acting on the weight roller is increased. When this centrifugal force becomes larger than the forcing force of the forcing means, the weight roller is moved to the radially outer direction to move the movable sheave close to the fixed sheave so that the drive pulley starts to be closed. When the closing operation of the drive pulley switches to the clutch connection state so that the power can be transmitted between the input shaft and the drive pulley or between the belt and the drive pulley. Thus, the V-belt rotates in accordance with the rotation of the input shaft and the drive pulley and the power is transmitted between the input shaft and the output shaft. In this state of power transmission by the belt, when the rotation speed of the input shaft is further increased and the centrifugal force that acts on the weight roller is increased, the movable sheave of the drive pulley is moved further closer to the fixed sheave, so that the drive pulley is changed to the closing direction. The V-belt that has been moved by being pulled by the closed drive pulley forces the movable sheaves of the driven pulley to be moved apart from the fixed sheave to open the driven pulley. Thus the transmission gear ratio is increased so that the transmission is continuously changed from the low speed state to the high speed state. Hence, this embodiment can provide the same effect as above.

Spring means for forcing the movable sheave of the drive pulley to move away from the fixed sheave against the weight of the weight roller is provided so that the V-belt is maintained on the clutch means of the drive pulley when the V-belt is located on the clutch means. Thus, the movable sheave is forced to move away from the fixed sheave against the weight of the weight rollers when the V-belt is located on the clutch means of the drive pulley. As a result, the V-belt is maintained stably on the clutch means with no fluctuation due to the weight of the weight rollers.

The present invention provides a vehicle provided with the above-described continuously variable transmission. This vehicle is preferably a motorbike. Thus, the continuously variable transmission of the present invention can be applied effectively.

This and other advantages of the present invention will become apparent to those skilled in the art upon reading and understanding the following detailed description with reference to the accompanying figures.

### BRIEF DESCRIPTION OF THE DRAWINGS

Figure **1** is a cross-sectional view showing an enlarged primary part of a continuously variable transmission of one example of the present invention.
Figure **2** is a cross-sectional view showing the entire configuration of the continuously variable transmission.
Figure **3** is an exploded perspective view of a clutch mechanism.
Figure **4** is a front view showing rollers held by a holding plate.
Figure **5** is a view for illustrating the operation of the clutch mechanism with a development of the plate.

### DETAILED DESCRIPTION OF THE INVENTION

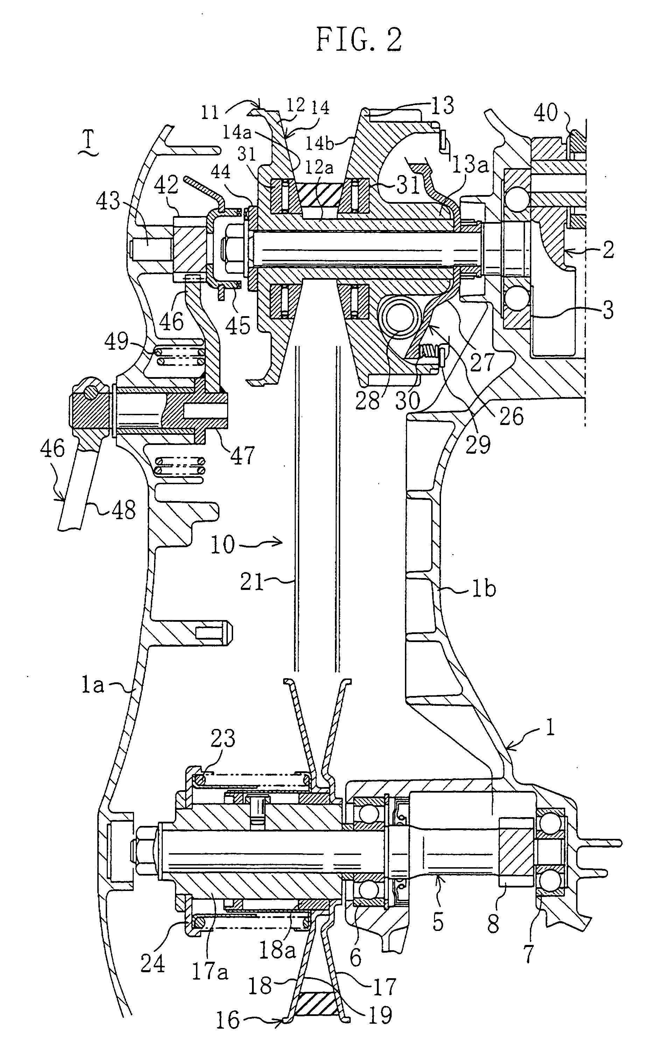

Hereinafter, the present invention will be described by way of examples with reference to the accompanying drawings. Figure **2** is a belt type continuously variable transmission **T** according to an example of the present invention. The continuously variable transmission **T** is mounted on a motorbike (autobike) as a vehicle. More specifically, the continuously variable transmission **T** is provided between an on-board engine and a rear wheel as a driving wheel (both not shown) in a motorbike, that is, in the middle of a power transmission path for transmitting the rotation power of the engine to the rear wheel.

The above-described continuously variable transmission **T** has a built-in clutch, and includes a left case **1a** and a left case **1** that is divided by the left case **1a.** In a front portion of the left case **1a**, a crankshaft **2** of an engine horizontally extending as an input shaft is supported rotatably by bearings **3,** and the head (output portion) of the crankshaft **2** extends between the left and right cases **1a** and **1b.** In a rear portion of the case **1,** an output shaft **5** horizontally extending parallel to the head of the crankshaft **2** with an interval in the rear of the head of the crankshaft **2** is rotatably supported by bearings **6** and **7** between the left and the right cases **1a** and **1b.** A drive gear **8** is formed integrally with the output shaft **5** between the left and the right cases **1a** and **1b.** The drive gear **8** is driven-coupled to a driven gear on the wheel shaft of the rear wheel, although not shown.

A variable speed pulley mechanism **10** for driven-coupling the head of the crankshaft **2** (input shaft) and the output shaft **5** with a V-belt **21** in transmission variable manner is housed in the case **1** (left and right cases **1a** and **1b**). The variable speed pulley mechanism **10** includes a drive pulley **11** made of a variable speed pulley provided on the crankshaft **2**. The drive pulley **11** includes a flange-shaped fixed sheave **12** and a flange-shaped movable sheave **13**. The fixed sheave **12** is coupled onto the crankshaft **2** in a boss portion **12a** in such a manner that it can rotate together with the crankshaft **2** and cannot be slid thereon. The movable sheave **13** is supported in the bass portion **12a** (crankshaft **2**) of the fixed sheave **12** in such a manner that it is opposed to the fixed sheave **12** from the right side and can be slid and cannot be rotated relatively in a bass portion **13a.** A belt groove **14** having an approximately V shape is formed between the sheaves **12** and **13**.

On the other hand, a driven pulley **16** made of a variable speed pulley having an approximately the same diameter as that of the drive pulley **11** is provided on the output shaft **5.** The driven pulley **16** has the same configuration as that of the drive pulley **11** and includes a flange-shaped fixed sheave **17** and a flange-shaped movable sheave **18**. The fixed sheave **17** is supported on the output shaft **5** in a boss portion **17a** in such a manner that it can rotate together with the output shaft **5** and cannot be slid thereon. The movable sheave **18** is supported in the bass portion **17a** (output shaft **5**) of the fixed sheave **17** in such a manner that it is opposed to the fixed sheave **17** from the left side, that is, in the direction opposite to the opposing direction of the movable sheave **13** to the fixed sheave **12** in the drive pulley **11,** and can be slid and cannot be rotated relatively in a bass portion **18a.** A belt groove **19** having an approximately V shape is formed between the sheaves **17** and **18.**

A V-belt **21** is wounded between the belt groove **14** of the drive pulley **11** and the belt groove **19** of the driven pulley **16**, and the belt diameter during wind of the pulleys **11** and **16** are changed by moving the movable sheaves **13** and 18 close to and away from the fixed sheaves **12** and **17** of the pulleys **11** and **16**, respectively. For example, when the movable sheave **13** of the drive pulley **11** is moved close to the fixed sheave **12**, and the movable sheave **18** of the driven pulley **16** is moved apart from the fixed sheave **17**, then the belt diameter during wind of the drive pulley **11** is larger than that of the driven pulley **16**, so that the rotation of the crankshaft **2** is transmitted to the output shaft **5** in an increased speed, which leads to a high speed state (Hi state). On the other hand, when the movable sheave **13** of the drive pulley **11** is moved apart from the fixed sheave **12**, and the movable sheave **18** of the driven pulley **16** is moved apart from the fixed sheave **17**, then the belt diameter during wind of the drive pulley **11** is smaller and the belt diameter during wind of the driven pulley **16** is larger, so that the rotation of the crankshaft 2 is transmitted to the output shaft **5** in a decreased speed, which leads to a low speed state (Lo state).

A compression spring **23** as forcing means for forcing the movable sheave **18** to be close to the fixed sheave **17** is provided on the side of the back face of the movable sheave **18** of the driven pulley **16**. In other words, a flange-shaped spring receiving member **24** is integrally provided on the left end of the boss portion **17a** of the fixed sheave **17**, and the compression spring **23** is provided between the spring receiving member **24** and the back face of the movable sheave **18** while being contracted in the circumference of the boss portion **18a** of the movable sheave **18**, and the spring force of the compression spring **23** in the elongation direction forces the movable sheave **18** to move toward the fixed sheave **17** so that the driven pulley **16** is closed. At the same time, the drive pulley **11** is forced to the opening direction by pulling the V-belt **21** toward the driven pulley **16** by forcing the driven pulley **16** to be closed. In the state where the driven pulley **16** is closed to the highest extent (the state shown in Figure **2**), the boss portion **18a** of the movable sheave **18** is in contact with the fixed sheave **17**, and there is no belt tension.

On the other hand, a centrifugal weight mechanism **26** is provided on the side of the back face of the movable sheave **13** of the drive pulley **11**. The centrifugal weight mechanism **26** has a guide plate **27** whose inner end is joined and fixed onto the crankshaft **2** on the right end of the boss portion **12a** of the fixed sheave **12** of the drive pulley **11**. The guide plate **27** is a disk-shaped plate that is tapered and inclined toward the movable sheave **13** (left side) toward the radially outer direction. The back face of the movable sheave **13** is tapered toward the guide plate **27** (right side) toward the radially outer direction, substantially in the same manner as the groove side face **14b** of the belt groove **14** on the side of the movable sheave, which is the surface of the movable sheave **13**. A plurality of weight rollers **28** (only one is shown in the drawings) is arranged such that they are spaced away from each other in the circumference direction and can roll in the radial direction while sandwiched by the back face of the movable sheave **13** and the guide plate **27.** The centrifugal force caused by the rotation of the drive pulley **11** (crankshaft **2**) acts on each weight roller **28** so that an increase in the centrifugal force drives the weight rollers **28** to roll along the guide plate **27** on the radially outer direction while being sandwiched by the back face of the movable sheave **13** and the guide plate **27**. Thus, the movable sheave **13** of the drive pulley **11** is moved close to the fixed sheave **12** against the forcing force of the compression spring **23** on the side of the driven pulley **16**, so that the belt diameter during wind of the drive pulley **11** can be increased.

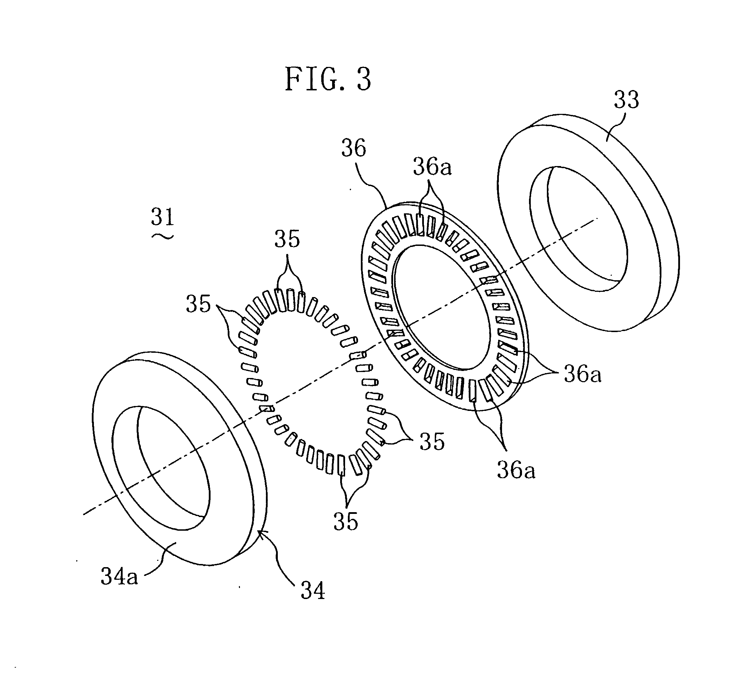

The present invention is characterized in that clutch mechanisms **31** and **31** are buried, opposing to each other, on the shaft line direction of the drive pulley **11** on the groove side face **14a** on the side of the fixed sheave and the groove side face **14b** on the side of the movable sheave in the bottom of the belt groove **14** of the drive pulley **11**. The clutch mechanisms **31** and **31** disconnect the power transmission between the V-belt **21** and the drive pulley **11** so as to block the V-belt **21** from operating together with the fixed and the movable sheaves **12** and **13** while the V-belt **21** is in contact with them at its sides. In other words, ring grooves **32** and **32** having the same diameter that are obtained by recessing the groove side faces **14a** and **14b** concentrically with the fixed and the movable sheaves **12** and **13,** respectively, are formed on the groove side faces **14a** and **14b** on the sides of the fixed and the movable sheaves in the bottom of the belt groove **14**. The clutch mechanism **31** is housed and fixed in each ring groove **32**. The two clutch mechanisms **31** and **31** are identical and, as shown in Figure **3**, includes a pair of rotating members of a fixed plate **33** and a rotating plate **34**, multiple rollers **35**, ... arranged between the fixed and the rotating plates **33** and **34**, and a holding plate **36** (holding member). The fixed plate **33** and the rotating plate **34** are concentrically opposed to each other and can rotate relative to each other. When the rotating plate **34** is pressed against the opposing fixed plate **33**, a connection state is established (the clutch is ON). The fixed plate **33** is a disk ring and the surface and the back surface of the fixed plate **33** are planes orthogonal to the shaft line direction of the drive pulley **11** (crankshaft **2**). The fixed plate **33** is fixed to the fixed sheave **12** in such a manner that the fixed plate **33** is concentric with the fixed sheave **12** and can rotate together with the fixed sheave **12** while being disposed in the bottom of the ring groove **32**.

On the other hand, the rotating plate **34** is basically a disk ring having the same diameter as that of the fixed plate. The back surface of the rotating plate **34** opposing to the surface of the fixed plate **33** is a plane orthogonal to the shaft line of the drive pulley **11**, whereas the surface thereof is a tapered face **34a** that is inclined at the same tapering angle as those of the groove side faces **14a** and **14b** of the belt groove **14** from the center to the outer circumference so as to approach the back surface. The rotating plate **34** is concentrically opposed to the fixed plate **33** on the side of the opening of the ring groove **32**, that is, on the side of the center in the belt groove width direction of the fixed plate **33**. The tapered face **34a** of the surface of the rotating plate **34** is flush with the groove side faces **14a** and **14b** of the belt groove **14**, and the rotating plate **34** is rotated relative to the fixed plate **33** (sheaves **12** and **13**) by the pressing force of the V-belt **21** while the V-belt **21** in the belt groove **14** is pushed up and is in contact with the tapered face **34a** of the surface of the rotating plate **34** at the side faces thereof.

The multiple rollers **35**, ... are arranged along the circumferential directions of the rotating plate **34** and the fixed plate **33** between the fixed plate **33** and the rotating plate **34,** and the rolling axis center of each roller extends obliquely with a predetermined tilt angle θ with respect to the radial direction of the rotating plate **34** and the fixed plate **33.**

The holding plate **36** is of a shape of a disk ring having a slightly smaller thickness of that of the outer diameter of the rollers **35**, and multiple holing holes **36a**, **36a,** ... that are rectangular through-holes for holding the rollers **35,** one hole for one roller, with the tilt angle θ unchanged are arranged in the circumference direction. The multiple rollers **35, 35,** ... are held in the holding holes **36a, 36a,** ... such that they are spaced away from each other in the circumferential direction and can roll.

The rotating plate **34** and the holding plate **36** (roller **35**) are interlocked to the ring groove **32** so as not to be detached therefrom by fixture means.

In Figure **2**, a reference numeral **40** denotes a connecting rod of an engine coupled to the crankshaft **2**. A reference numeral **41** denotes a starter mechanism provided closer to the front portion of the left case **1a,** and includes a driven shaft **43,** an interlocking portion **45,** a drive shaft **47**, and a kick lever **48**, and a coil spring **49**. The driven shaft **43** is supported rotatably in a concentrical manner with the crankshaft **2** and opposed to the head of the crankshaft **2** by the left case **1a,** and has a driven gear **42.** The interlocking portion **45** is attached to the head of the driven shaft **43** such that it can rotate together with the driven shaft **43**, and rotates the crankshaft **2** by interlocking to an interlocking portion **44** provided in the head of the crankshaft **2.** The drive shaft **47** is supported parallel to the driven shaft **43** by the left case **1a** and is provided with a drive gear **46** made of a sector gear engaged with the driven gear **42** of the driven shaft **43**. The kick lever **48** is attached to the end of the drive shaft **47** on the outer side of the case. The coil spring **49** forces the drive shaft **47** to rotate.

A flange part **29** is formed at the outer peripheral edge on the back face of the moveable sheave **13** of the drive pulley **11** over the outer periphery of the guide plate **27** toward the opposite side to the fixed sheave **12**, integrally with the outer periphery of the back face of the guide plate **27** in the axial direction. Compression springs **30** are interposed between the flange part **29** and the back face of the outer periphery of the guide plate **27**. When the engine is in an idling state where the V-belt **24** rides on the clutch mechanisms **31** and **31** of the drive pulley **11** and the motorbike are stopping, the compression springs **30** force the movable sheave **13** of the drive pulley **11** to move away from the fixed sheave **12** against the weight of the weight rollers **28**, so that the V-belt **21** is maintained on the clutch mechanisms **31** and **31**. Thereby, no belt tension is caused.

Therefore, in this example, when the crankshaft **2** is rotated during operation of the engine, the drive pulley **11** attached to the crankshaft **2** and the guide plate **27** of the centrifugal weight mechanism **26** are rotated integrally. As the crankshaft **2** and the drive pulley **11** are rotated, a centrifugal force acts on the weight rollers **28, 28,** ... on the side of the back face of the movable sheave **13** of the drive pulley **11**. When the rotation speed of the engine is low, the centrifugal force that acts on the weight rollers **28** is smaller than the forcing force of the compression spring **23** of the driven pulley **16.** Therefore, the forcing force of the compression spring **23** forces the movable sheave **18** of the driven pulley **16** to be moved closer to the fixed sheave **17** so that the driven pulley **16** is closed. On the other hand, the movable sheave **13** of the drive pulley **11** is moved apart from the fixed sheave **12** by the V-belt **21** that has been moved by being pulled by the closed driven pulley **16** so that the drive pulley **11** is opened.

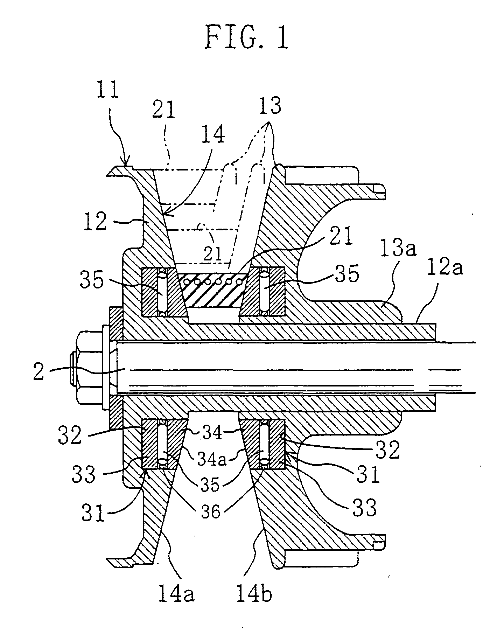

As shown by the solid line in Figure **1**, in the open drive pulley **11**, the V-belt **21** is pushed up the clutch mechanisms **31** and **31** on the groove side faces **14a** and **14b** on the left and right sides of the belt groove **14** in its bottom, and this push-up of the V-belt **21** on the clutch mechanisms **31** and **31** interrupts the power transmission between the drive pulley **11** and the V-belt **21**. This prevents the V-belt **21** from rotating together with the drive pulley **11**, although the crankshaft **2** and the drive pulley **11** are rotated. Thus, the rotation power of the crankshaft **2** is not transmitted to the output shaft **5** so that the motorbike does not run.

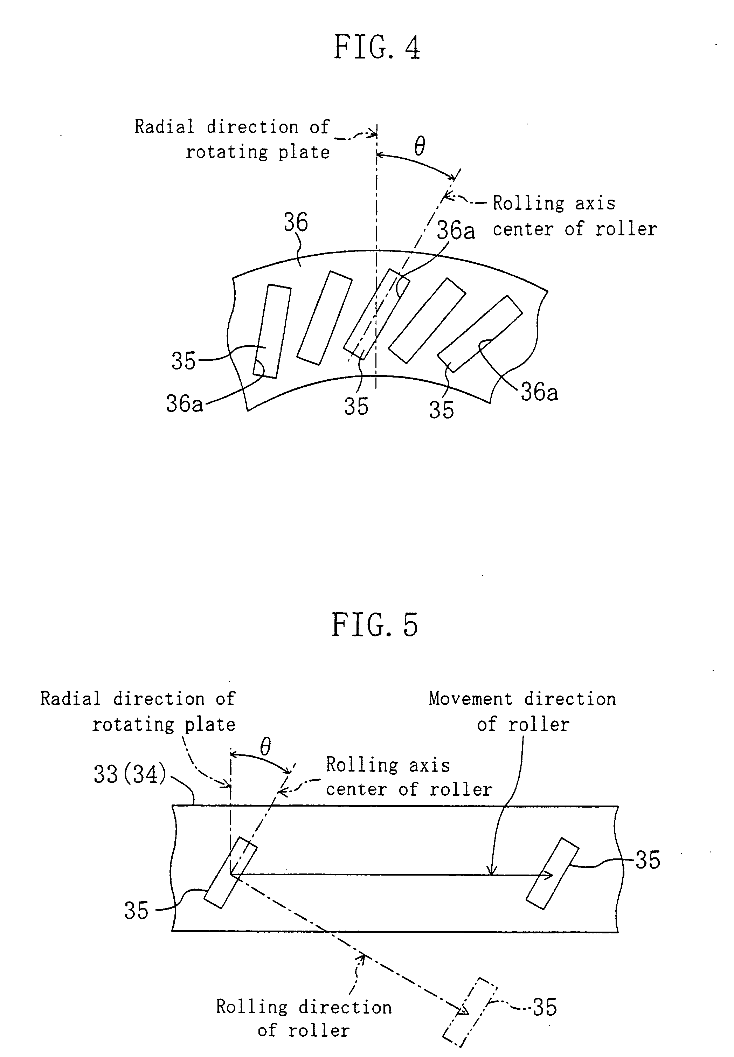

At this time, each clutch mechanism **31** includes the fixed plate **33** fixed to the fixed sheave **12** of the drive pulley **11** and the rotating plate **34** that rotates in contact with the side face of the belt **21.** The multiple rollers **35**, ... extending obliquely with a predetermined tilt angle θ with respect to the radial direction of the rotating plate **34** are arranged between the fixed plate **33** and the rotating plate **34**, and these rollers **35** are spaced apart in the circumference direction and held rollably by the holding plate **36**. Therefore, when the rotating plate **34** is rotated while being pressed from the side face of the belt **21**, as shown in the development of Figure **5**, the relative rotation of the rotating plate **34** and the fixed plate **33** allows each roller **35** to slide along the rotation direction of the rotating plate **34** that is different from the rolling direction (direction shown in the virtual line of Figure **5)** while rolling with being held in the holding plate **36**, and this rolling and slide of each roller **35** can provide stable rotation resistance.

When the V-belt **21** is located on the clutch mechanisms **31** and **31** of the drive pulley **11**, the compression springs **30** force the movable sheave **13** to move away from the fixed sheave **12** against the weight of the weight rollers **28** to maintain the V-belt **21** on the clutch mechanisms **31** and **31**. Accordingly, the V-belt **21** is maintained stably on the clutch mechanisms **31** and **31** of the drive pulley **11**, with a result of no fluctuatoin due to the weight of the weight rollers **28**.

When the rotation speed of the engine is increased from the non-connection state of the clutch (OFF state), the centrifugal force acting on each weight roller **28** is increased. When this centrifugal force becomes larger than the forcing force of the compression spring **23**, the weight rollers **28** are moved along the tapered surface of the guide plate **27** to the radially outer direction and this movement forces the movable sheave **13** to move closer to the fixed sheave **12** so that the drive pulley **11** started to be closed. As shown in the chain in Figure **1**, when the closing operation of the drive pulley **11** forces the belt **21** to move from the position of the clutch mechanisms **31** and **31** in the bottom of the belt groove **14** to the radially outer side to be in contact with the groove side faces **14a** and **14b** on the sides of the fixed and the movable sheaves, the clutch mechanism **31** is switched from the non-connection state to the connection state (ON state) so that the power can be transmitted between the belt **21** and the drive pulley **11** (low speed state), and the rotation of the crankshaft **2** and the drive pulley **11** rotates the belt **21**. The rotational movement of the belt **21** transmits the rotation power of the crankshaft 2 from the output shaft **5** to the rear wheel via the drive gear **8** and the driven gear and thus the motorbike starts to run.

Thus, in the power transmission state between the belt **21** and the drive pulley **11**, a transmission-shift state can be achieved by varying the transmission gear ratio continuously between the low speed and the high speed in accordance with the increase and the decrease in the rotation speed of the engine. More specifically, when the rotation speed of the engine is increased and the centrifugal force acting on each weight roller **28** is increased, the weight roller **28** further moves to the radially outer direction so that the movable sheave **13** becomes closer to the fixed sheave **12** so that the drive pulley **11** is turned to be in the closing direction. The belt **21** that has been moved by being pulled by the drive pulley **11** in the closing direction forces the movable sheave **18** of the driven pulley **16** to move apart from the fixed sheave **17** so that the driven pulley **16** is open. Thus, the transmission gear ratio of the continuously variable transmission **T** is increased so that the continuously variable transmission **T** is shifted continuously from the low speed state to the high speed state. At the maximum speed state, as shown by the double dotted chain line in Figure **1**, the drive pulley **11** is opened to the maximum extent, whereas the driven pulley **16** is closed to the minimum extent.

When the rotation speed of the engine is reduced, to the contrary to the above, the transmission gear ratio of the continuously variable transmission **T** is reduced so that the continuously variable transmission **T** is shifted continuously from the high speed state to the low speed state. For the state where the motorbike stops running, the opposite operation to the above returns the low speed state to the clutch non-connection state.

Therefore, in this example, the clutch mechanism **31** for rolling and sliding the rollers **35** is provided in the drive pulley **11**, so that the power transmission between the belt **21** and the drive pulley **11** can be disconnected smoothly. In addition, the clutch mechanism **31** is provided in each of the groove side faces **14a** and **14b** on the sides of the fixed and the movable sheaves in the bottom of the belt groove **14** of the drive pulley **11,** so that the power transmission between the drive pulley **11** and the belt **21** can be disconnected reliably and stably. Thus, the motorbike can start (or stop) smoothly.

Furthermore, each clutch mechanism **31** is of a built-in pulley type in which it is provided in the groove side faces **14a** and **14b** on the side of the fixed and the movable sheaves of the belt groove **14** of the drive pulley **11**, and therefore the configuration of the continuously variable transmission **T** is simple and compact. Moreover, each clutch mechanism **31** has a simpler configuration than that of a centrifugal clutch having a weight and is inexpensive so that the cost of the continuously variable transmission **T** can be reduced.

### Other examples

In the above example, the clutch mechanism **31** is provided in each of the groove side faces **14a** and **14b** on the sides of the fixed and the movable sheaves of the belt groove **14** of the drive pulley **11**. However, when the movable sheave **13** is rotated relative to the crankshaft, the clutch mechanism **31** can be provided only in the groove side face **14a** on the side of the fixed sheave.

In the above example, the clutch mechanism **31** is provided in the bottom of the belt groove **14.** However, the clutch mechanism **31** is not necessarily positioned in the bottom of belt groove **14**, but the position can be changed with the transmission-shift pattern of the continuously variable transmission.

Furthermore, in the above example, the fixed plate **33** as one rotating member of the clutch mechanism **31** is provided separately from each of the sheaves **12** and **13** of the drive pulley **11**. However, each of the sheaves **12** and **13** can constitute a rotating member itself, and can be used as the bottom of the ring groove **32**.

In the above embodiment, the clutch mechanism **31** is provided on the side of the belt groove **14**. However, the clutch mechanism **31** can be provided so as to disconnect the power transmission between the crankshaft **2** (or may be output shaft) and the drive pulley **11** (or may be a driven pulley). For example, the fixed and the movable sheaves **12** and **13** of the drive pulley **11** (variable speed pulley) are supported rotatably on the crankshaft **2** (rotating shaft) and the fixed plate **33** of the clutch mechanism **31** is provided in the movable sheave **13** (or the fixed sheave **12**) of the drive pulley **11** (separately from the sheave or integrally with the sheave by having it serve for the two functions). On the other hand, the rotating plate **34** is provided on the side of the crankshaft **2**, for example, provided in a member that rotates together with the crankshaft **2**, and the rotating plate **34** is pressed against the fixed plate **33** on the drive pulley **11** by the weight rollers **28**, so as to have the clutch mechanism **31** be in the connection state to perform power transmission between the crankshaft **2** and the drive pulley **11**.

Furthermore, the clutch mechanism **31** is not necessarily those described above, but can be various types disclosed in the above proposed example (see Japanese Laid-Open Patent Publication No. 8-74843).

Furthermore, in the above example, the continuously variable transmission **T** having the centrifugal weight mechanism **26** has been described. However, the present invention is not limited to such a continuously variable transmission, but can be applied to other types of continuously variable transmissions. In the above example, the continuously variable transmission **T** for motorbikes has been described. However, the present invention can be applied as continuously variable transmissions for other vehicles than motorbikes, such as vehicles for agriculture, lawn mower and golf carts, or continuously variable transmissions for other purposes.

The embodiments disclosed in this application are to be considered in all respects as illustrative and not limiting. The scope of the invention is indicated by the appended claims rather than by the foregoing description.

## Claims

1. A continuously variable transmission comprising a variable speed pulley having fixed and movable sheaves (12, 13) that are rotatably provided on a rotating shaft (2) and opposed to each other, in which a belt groove (14) is formed between the sheaves (12;13); and a V-belt (21) wounded in the belt groove (14) of the variable speed pulley, wherein transmission is shifted by changing a belt diameter during wind in the belt groove (14) by moving the movable sheave (13) close to and away from the fixed sheave (12) to open and close the variable speed pulley, **characterized in that**
a clutch means (31) for disconnecting power transmission between the rotating shaft (2) and the variable speed pulley is provided,
the clutch means (31) comprises:
a pair of ring-shaped rotating members (33, 34) that are arranged such that they are concentrically opposed to each other and can rotate relative to each other;
multiple rollers (35) that are arranged along a circumferential direction of the rotating members (33, 34) between the two rotating members (33, 34) and whose rolling axis center is extending obliquely with a predetermined angle with respect to a radial direction of the rotating members; and
a holding member (36) for holding the multiple rollers (35) such that the rollers (35) are spaced away from each other and can roll,
wherein when the rotating members (33, 34) are pressed against the opposing rotating members, a connection state is established,
one of the rotating members (33, 34) is provided on one side of the variable speed pulley, and the other rotating member is provided on the rotating shaft (2).

2. A continuously variable transmission comprising a variable speed pulley having fixed and movable sheaves (12, 13) that are provided on a rotating shaft (12) and opposed to each other, in which a belt groover (14) is formed between the sheaves; and a V-belt (21) wounded in the belt groove (14) of the variable speed pulley, wherein transmission is shifted by changing a belt diameter during wind in the belt groove (14) by moving the movable sheave (18) close to and away from the fixed sheave (17) to open and close the variable speed pulley.
wherein clutch means (31) for disconnecting power transmission between the V-belt (21) and the variable speed pulley is provided at least on a groove side face on the fixed sheave side (17) of the belt groove (14) in the variable speed, **characterized in that**
the clutch (31) means comprises:
a pair of ring-shaped rotating members (33, 34) that are arranged such that they are concentrically opposed to each other and can rotate relative to each other;
multiple rollers (35) that are arranged along a circumferential direction of the rotating members (34, 35) between the two rotating members (33, 34) and whose rolling axis center is extending obliquely with a predetermined angle with respect to a radial direction of the rotating members; and
a holding member (36) for holding the multiple rollers (35) such that the rollers (35) are spaced away from each other and can roll,
wherein when the rotating members (33, 34) are pressed against the opposing rotating members, a connection state is established,
one of the rotating members (34) is provided on a sheave (12, 13) of the variable speed pulley such that the rotating member can rotate together with the sheave (12, 13), and
the other rotating member is provided such that it rotates relative to the one rotating member while being in contact with a side face of the V-belt (21).

3. The continuously variable transmission according to claim 2, wherein the clutch means (31) is provided in each groove side face on the sides of the fixed and movable sheaves (12, 13) of the V-belt (21) in the variable speed pulley, the two clutch means (31) being opposed to each other.

4. The continuously variable transmission according to any one of claims 1 to 3,
wherein the rotating shaft (2) is an input shaft and the variable speed pulley is a drive pulley,
the clutch means (3) is provided on the drive pulley side.

5. The continuously variable transmission according to claim 4, comprising:
a driven pulley made of a variable speed pulley in which a fixed sheave (17) and a movable sheave (18) are supported on an output shaft (5) that is parallel to the input shaft (2), and a belt groove (14) is formed between the two sheaves (12, 13);
the V-belt (21) wounded between the belt grooves (14) of the drive and the driven pulleys;
a weight roller (28) that is provided on a side of a back face of the movable sheave (13) of the drive pulley and is moved to a radially outer direction by an increase of a centrifugal force caused by rotation to move the movable sheave (13) close to the fixed sheave (12) so that the belt diameter during wind of the drive pulley is increased; and
forcing means for forcing the movable sheave (18) to move close to the fixed sheave (17) that is provided on a side of the back face of the movable sheave (18) of the driven pulley.

6. The continuously variable transmission according to claim 5, comprising spring means (30) for forcing the movable sheave (13) of the drive pulley to move away from the fixed sheave (12) against the weight of the weight rollers so that the V-belt (21) is maintained on the clutch means (31) of the drive pulley when the V-belt (21) is located on the clutch means (31).

7. A vehicle provided with one of the continuously variable transmissions according to claims 1 to 6.

8. The vehicle according to claim 7, which is a motorbike.

## Patentansprüche

1. Stufenloses Getriebe, welches eine Riemenscheibe veränderlicher Drehzahl mit festen und beweglichen Rillenscheiben (12, 13), die an einer sich drehenden Welle (2) einander gegenüberliegend drehbar vorgesehen sind, wobei eine Riemennut (14) zwischen den Rillenscheiben (12;13) ausgebildet ist, sowie einen in der Riemennut (14) der Riemenscheibe veränderlicher Drehzahl gewickelten Keilriemen (21) umfasst, wobei das Getriebe durch Ändern eines Riemendurchmessers während des Wickelns in der Riemennut (14) durch Bewegen der beweglichen Rillenscheibe (13) nahe hin zu und weg von der festen Rillenscheibe (12) zum Öffnen und Schließen der Riemenscheibe veränderlicher Drehzahl geschalten wird,
**dadurch gekennzeichnet, dass**
ein Kupplungsmittel (31) zum Unterbrechen der Kraftübertragung zwischen der sich drehenden Welle (12) und der Riemenscheibe veränderlicher Drehzahl vorgesehen ist,
das Kupplungsmittel (31) Folgendes umfasst:
- ein Paar ringförmiger sich drehender Elemente (33, 34), die so angeordnet sind, dass sie einander konzentrisch gegenüberliegen und sich zu einander drehen können;
- mehrere Rollen (35), die entlang einer Umfangsrichtung der sich drehenden Elemente (33, 34) zwischen den zwei sich drehenden Elementen (33, 34) angeordnet sind und deren Rollachsenmitte bei einem vorbestimmten Winkel bezüglich einer radialen Richtung der sich drehenden Elemente schräg verläuft, und
- ein Halteelement (36) zum Halten der mehreren Rollen (35), so dass die Rollen (35) von einander beabstandet sind und rollen können,
wobei ein Verbindungszustand hergestellt wird, wenn die sich drehenden Elemente (33, 34) gegen die gegenüberliegenden sich drehenden Elemente gedrückt werden,
eines der sich drehenden Elemente (33, 34) an einer Seite der Riemenscheibe veränderlicher Drehzahl vorgesehen ist und das andere sich drehende Element an der sich drehenden Welle (2) vorgesehen ist.

2. Stufenloses Getriebe, welches eine Riemenscheibe veränderlicher Drehzahl mit festen und beweglichen Rillenscheiben (12, 13), die an einer sich drehenden Welle (12) einander gegenüberliegend vorgesehen sind, wobei eine Riemennut (14) zwischen den Rillenscheiben ausgebildet ist, sowie einen in der Riemennut (14) der Riemenscheibe veränderlicher Drehzahl gewickelten Keilriemen (21) umfasst, wobei das Getriebe durch Ändern eines Riemendurchmessers während des Wickelns in der Riemennut (14) durch Bewegen der beweglichen Rillenscheibe (18) nahe hin zu und weg von der festen Rillenscheibe (17) zum Öffnen und Schließen der Riemenscheibe veränderlicher Drehzahl geschalten wird,
wobei ein Kupplungsmittel (31) zum Unterbrechen der Kraftübertragung zwischen dem Keilriemen (21) und der Riemenscheibe veränderlicher Drehzahl an mindestens einer Nutseitenfläche an der festen Rillenscheibenseite (17) der Riemennut (14) in der veränderlichen Drehzahl vorgesehen ist,
**dadurch gekennzeichnet, dass**
das Kupplungsmittel (31) Folgendes umfasst:
- ein Paar ringförmiger sich drehender Elemente (33, 34), die so angeordnet sind, dass sie einander konzentrisch gegenüberliegen und sich zu einander drehen können;
- mehrere Rollen (35), die entlang einer Umfangsrichtung der sich drehenden Elemente (34, 35) zwischen den zwei sich drehenden Elementen (33,34) angeordnet sind und deren Rollachsenmitte bei einem vorbestimmten Winkel bezüglich einer radialen Richtung der sich drehenden Elemente schräg verläuft, und
- ein Halteelement (36) zum Halten der mehreren Rollen (35), so dass die Rollen (35) von einander beabstandet sind und rollen können,
wobei ein Verbindungszustand hergestellt wird, wenn die sich drehenden Elemente (33, 34) gegen die gegenüberliegenden sich drehenden Elemente gedrückt werden,
eines der sich drehenden Elemente (34) an einer Rillenscheibe (12, 13) der Riemenscheibe veränderlicher Drehzahl so vorgesehen ist, dass das sich drehende Element zusammen mit der Rillenscheibe (12, 13) drehen kann, und
das andere sich drehende Element so vorgesehen ist, dass es sich gegenüber dem einen sich drehenden Element dreht, während es in Berührung mit einer Seitenfläche des Keilriemens (21) steht.

3. Stufenloses Getriebe nach Anspruch 2, **dadurch gekennzeichnet, dass** das Kupplungsmittel (31) in jeder Nutseitenfläche an den Seiten der festen und beweglichen Rillenscheiben (12, 13) des Keilriemens (21) in der Riemenscheibe veränderlicher Drehzahl vorgesehen ist, wobei die zwei Kupplungsmittel (31) einander gegenüber liegen.

4. Stufenloses Getriebe nach einem der Ansprüche 1 bis 3, **dadurch gekennzeichnet, dass** die sich drehende Welle (2) eine Antriebswelle und die Riemenscheibe veränderlicher Drehzahl eine Antriebsriemenscheibe ist, das Kupplungsmittel (31) an der Antriebsriemenscheibenseite vorgesehen ist.

5. Stufenloses Getriebe nach Anspruch 4, welches umfasst:
- eine aus einer Riemenscheibe veränderlicher Drehzahl gefertigte Antriebsriemenscheibe, in welcher eine feste Rillenscheibe (17) und eine bewegliche Rillenscheibe (18) an einer Abtriebswelle (5) gelagert sind, die parallel zur Antriebswelle (2) ist, und eine Riemennut (14) zwischen den zwei Rillenscheiben (12, 13) ausgebildet ist;
- den zwischen den Riemennuten (14) der Antriebs- und Abtriebsriemenscheiben gewickelten Keilriemen (21);
- eine Gewichtsrolle (28), die an einer Seite einer Rückseite der beweglichen Rillenscheibe(13) der Antriebsriemenscheibe vorgesehen ist und durch eine durch Drehung bewirkte Zunahme der Zentrifugalkraft in eine radial äußere Richtung bewegt wird, um die bewegliche Rillenscheibe (13) nahe zu der festen Rillenscheibe (12) zu bewegen, so dass der Riemendurchmesser während des Wickelns der Antriebsriemenscheibe vergrößert wird; und
- Zwangmittel zum Zwingen der beweglichen Rillenscheibe (18), sich nahe zur festen Rillenscheibe (17), die an einer Seite der Rückseite der beweglichen Rillenscheibe (18) der angetriebenen Riemenscheibe vorgesehen ist, zu bewegen.

6. Stufenloses Getriebe nach Anspruch 5, welches Federmittel (30) zum Zwingen der beweglichen Rillenscheibe (13) der Antriebsriemenscheibe, sich von der festen Rillenscheibe (12) gegen das Gewicht der Gewichtrollen weg zu bewegen, umfasst, so dass der Keilriemen (21) an dem Kupplungsmittel (31) der Antriebsriemenscheibe gehalten wird, wenn der Keilriemen (21) sich an dem Kupplungsmittel (31) befindet.

7. Mit einem der stufenlosen Getriebe nach Anspruch 1 bis 6 versehenes Fahrzeug.

8. Fahrzeug nach Anspruch 7, welches ein Motorrad ist.

## Revendications

1. Transmission variable en continu comprenant une poulie à vitesse variable comportant des roues fixe et mobile (12,13) qui sont prévues d'une manière tournante sur un arbre de rotation (2) et qui sont opposées l'une à l'autre, où une rainure de courroie (14) est formée entre les roues (12;13) ; et une courroie en V (21) enroulée dans la rainure de courroie (14) de la poulie à vitesse variable, où la transmission est changée en changeant un diamètre de courroie pendant l'enroulement dans la rainure de courroie (14) en approchant la roue mobile (13) à et en l'éloignant de la roue fixe (12) pour ouvrir et fermer la poulie à vitesse variable, **caractérisée en ce que**
un moyen d'embrayage (31) pour déconnecter la transmission de puissance entre l'arbre de rotation (2) et la poulie à vitesse variable est prévu,
le moyen d'embrayage (31) comprend :
deux éléments tournants de forme annulaire (33, 34) qui sont agencés de façon qu'ils soient opposés concentriquement l'un à l'autre et qu'ils puissent tourner l'un relativement à l'autre ;
des rouleaux multiples (35) qui sont agencés le long d'une direction circonférentielle des éléments tournants (33,34) entre les deux éléments tournants (33,34) et dont le centre de l'axe de roulement s'étend en oblique, avec un angle prédéterminé, par rapport à une direction radiale des éléments tournants ; et
un élément de retenue (36) pour tenir les rouleaux multiples (35) de façon que les rouleaux (35) soient espacés les uns des autres et puissent rouler,
où, lorsque les éléments tournants (33,34) sont pressés contre les éléments tournants opposés, un état de connexion est établi,
l'un des éléments tournants (33,34) est prévu sur un côté de la poulie à vitesse variable et l'autre élément tournant est prévu sur l'arbre de rotation (2).

2. Transmission variable en continu comprenant une poulie à vitesse variable possédant des roues fixe et mobile (12,13) qui sont prévues sur un arbre de rotation (2) et qui sont opposées l'une à l'autre, dans laquelle une rainure de courroie (14) est formée entre les roues ; et une courroie en V (21) enroulée dans la rainure de courroie (14) de la poulie à vitesse variable, où la transmission est changée en changeant le diamètre de la courroie pendant l'enroulement dans la rainure de courroie (14) en approchant la roue mobile (18) et en l'éloignant de la roue fixe (17) pour ouvrir et fermer la poulie à vitesse variable,
où un moyen d'embrayage (31) pour déconnecter la transmission de puissance entre la courroie en V (21) et la poulie à vitesse variable est prévu au moins sur une face latérale de rainure sur le côté de roue fixe (17) de la rainure de courroie (14) dans la vitesse variable, **caractérisée en ce que**
le moyen d'embrayage (31) comprend :
deux éléments tournants de forme annulaire (33,34) qui sont agencés de façon à être opposés concentriquement l'un à l'autre et à pouvoir tourner l'un relativement à l'autre ;
des rouleaux multiples (35) qui sont agencés le long d'une direction circonférentielle des éléments tournants (34,35) entre les deux éléments tournants (33,34) et dont le centre de l'axe de roulement s'étend en oblique selon un angle prédéterminé relativement à une direction radiale des éléments tournants ; et
un élément de retenue (36) pour maintenir les rouleaux multiples (35) de façon que les rouleaux (35) soient espacés l'un de l'autre et puissent rouler,
où, lorsque les éléments tournants (33,34) sont pressés contre les éléments tournants opposés, un état de connexion est établi,
l'un des éléments tournants (34) est prévu sur une roue (12,13) de la poulie à vitesse variable de telle sorte que l'élément tournant peut tourner conjointement avec la roue (12,13) et
l'autre élément tournant est prévu de façon qu'il tourne relativement à l'élément tournant précité tout en étant en contact avec une face latérale de la courroie en V (21).

3. Transmission variable en continu selon la revendication 2, où le moyen d'embrayage (31) est prévu dans chaque face latérale de rainure sur les côtés des roues fixe et mobile (12,13) de la courroie en V (21) dans la poulie à vitesse variable, les deux moyens d'embrayage (31) étant opposés l'un à l'autre.

4. Transmission variable en continu selon l'une des revendications 1 à 3,
où l'arbre de rotation (2) est un arbre d'entrée, et la poulie à vitesse variable est une poulie menante,
le moyen d'embrayage (31) est prévu sur le côté de la poulie menante.

5. Transmission variable en continu selon la revendication 4, comprenant :
une poulie menée constituée d'une poulie à vitesse variable dans laquelle une roue fixe (17) et une roue mobile (18) sont supportées sur un arbre de sortie (5) qui est parallèle à l'arbre d'entrée (2), et une rainure de courroie (14) est formée entre les deux roues (12,13) ;
la courroie en V (21) étant enroulée entre les rainures de courroie (14) des poulies menante et menée ;
un rouleau formant poids (28) qui est prévu sur un côté d'une face arrière de la roue mobile (13) de la poulie menante et qui est déplacé dans une direction radialement extérieure par une augmentation de la force centrifuge provoquée par la rotation pour amener la roue mobile (13) à proximité de la roue fixe (12) de telle sorte que le diamètre de la courroie pendant l'enroulement de la poulie menante augmente ; et
un moyen de contrainte pour contraindre la roue mobile (18) à s'approcher de la roue fixe (17) qui est prévu sur un côté de la face arrière de la roue mobile (18) de la poulie menée.

6. Transmission variable en continu selon la revendication 5, comprenant un moyen de ressort (30) pour contraindre la roue mobile (13) de la poulie menante à s'éloigner de la roue fixe (12) contre le poids des rouleaux formant poids de telle sorte que la courroie en V (21) est maintenue sur le moyen d'embrayage (31) de la poulie menante lorsque la courroie en V (21) se situe sur le moyen d'embrayage (31).

7. Véhicule pourvu d'une des transmission variables en continu selon les revendications 1 à 6.

8. Véhicule selon la revendication 7, qui est un cyclomoteur.
